# EUROPÄISCHE PATENTANMELDUNG

(11) **EP 1 136 312 A2**
(43) Veröffentlichungstag der Anmeldung: **26.09.2001**
(21) Anmeldenummer: 01106924.2
(22) Anmeldetag: 20.03.2001
(51) Int. Cl.: B60N 2/22

(54) **Gelenkbeschlag für einen Fahrzeugsitz**

(30) Priorität: 23.03.2000 DE 10014499
(71) Anmelder: Keiper GmbH & Co., 67657 Kaiserslautern (DE)
(72) Erfinder: Klein, Mario, 67663 Kaiserslautern (DE)
(74) Vertreter: Patentanwälte Hosenthien-Held und Dr. Held

(57) **Zusammenfassung**

Bei einem Gelenkbeschlag (1) für einen Fahrzeugsitz, mit wenigstens zwei relativ zueinander um eine Lehnendrehachse (6) verdrehbaren Beschlagteilen (3, 4), die durch eine Verriegelungsvorrichtung (4', 11) verriegelbar sind, wenigstens einem flexiblen Betätigungselement (35) zum Entriegeln der Verriegelungsvorrichtung (4', 11), dessen Wirkungslinie die Lehnendrehachse (6) schneidet, und wenigstens einer Umlenkung (30) für das flexible Betätigungselement (35), ist ein Ende des flexiblen Betätigungselementes (35) an einem Beschlagteil (3) befestigt.

## Beschreibung

Die Erfindung betrifft einen Gelenkbeschlag für einen Fahrzeugsitz mit den Merkmalen des Oberbegriffs des Anspruches 1.

Aus der DE 33 40 697 C2 ist ein Gelenkbeschlag dieser Art bekannt, bei dem als flexibles Betätigungselement zum Freischwenken ein gespanntes Seil vorgesehen ist. Von einem Entriegelungshebel her ist ein Seilabschnitt an der Lehnendrehachse vorbei, durch eine Buchse hindurch, um einen Stift eines Sperrelementes herum, wieder durch die Buchse hindurch, auf der anderen Seite der Lehnendrehachse vorbei zu einer Klemmhülse, mittels derer das Seilende an dem zuerst genannten Seilabschnitt befestigt ist. Die so gebildete Schlaufe sorgt für einen ausgeglichen Zug an dem Stift, wobei die Wirkungslinie die Lehnendrehachse schneidet. Bei einer Schwenkbewegung des Gelenkbeschlags bleibt das Seil daher gespannt. Die Herstellung der Teile ist kostengünstig, jedoch bleiben noch Wünsche offen.

Der Erfindung liegt die Aufgabe zu Grunde, einen Gelenkbeschlag für einen Fahrzeugsitz der eingangs genannten Art zu verbessern. Diese Aufgabe wird erfindungsgemäß durch einen Gelenkbeschlag für einen Fahrzeugsitz mit den Merkmalen des Anspruches 1 gelöst. Vorteilhafte Ausgestaltungen sind Gegenstand der Unteransprüche. Ein Fahrzeugsitz mit einem solchen Gelenkbeschlag ist Gegenstand des Anspruches 10.

Mit dem erfindungsgemäßen Gelenkbeschlag wird die auftretende Reibung insgesamt reduziert. Dadurch, daß ein Ende des flexiblen Betätigungselementes an einem Beschlagteil befestigt ist, treten an dieser Stelle keine Reibkräfte auf. Eine solche Befestigung kann auch einfach und kostengünstig verwirklicht werden. Um den Kräfte- und Wegeausgleich im flexiblen Betätigungselement leichter zu erreichen, ist das Betätigungselement vorzugsweise an oder im Bereich der Lehnendrehachse befestigt. Um günstige Reibverhältnisse zu erzielen, wird dies vorzugsweise dadurch erreicht, daß das flexible Betätigungselement an einer beschlagteilfesten Rolle oder einer anderen gekrümmten Anordnung befestigt ist, welche konzentrisch zur Lehnendrehachse angeordnet ist. An der beschlagteilfesten Rolle tritt lediglich eine geringe Gleitreibung auf, wenn das flexible Betätigungselement, falls dieses nach einer Umlenkung an der beschlagteilfesten Rolle vorbeigeführt ist, betätigt wird.
Die Umlenkung für das Betätigungselement kann auf der Wirkungslinie beweglich sein, was sich auf einfache und kostengünstige Weise durch eine drehbar gelagerte Rolle verwirklichen läßt, welche verschiebbar geführte oder schwenkbar angelenkt ist. Bei der sich drehenden Rolle treten dann nur Rollreibungskräfte auf.

In einer bevorzugten Ausführungsform weist das flexible Betätigungselement zwei nebeneinander angeordnete Abschnitte auf, zwischen denen die Wirkungslinie verläuft. Die im Betätigungselement wirkende Kraft verteilt sich dann auf zwei Abschnitte. Eine bevorzugte, geometrisch einfache Anordnung ergibt sich, wenn die Abschnitte zwischen zwei Rollen verlaufen. Bei einer Schwenkbewegung des Gelenkbeschlags wickelt sich ein Abschnitt ein Stück weit auf die beschlagteilfeste Rolle auf und der andere Abschnitt ein Stück weit von der beschlagteilfesten Rolle ab, während am jeweils anderen Ende der Abschnitte ein Stück an drehbaren Rolle umgelenkt wird. Vorzugsweise sind bei beiden Abschnitten das umgelenkte und abgewickelte bzw. aufgewickelte Stück gleich lang. Damit ist sicher gestellt, daß die Wirkungslinie weiterhin zwischen diesen Abschnitten verläuft. Mit dieser Anordnung ist ein Flaschenzug verwirklicht, der je nach Orientierung beim Entriegeln zu einer Reduktion der notwendigen Betätigungskraft oder des notwendigen Weges führt.

Der erfindungsgemäße Gelenkbeschlag kann bei Fahrzeugsitzen, insbesondere Kraftfahrzeugsitzen, eingesetzt werden, die eine freischwenkbare oder nach vorne klappbare Rückenlehne aufweisen, insbesondere bei solchen mit einer zusätzlichen Neigungseinstellung der Rückenlehne oder mit teilweise in offenen Aufnahmen geführten Seilzügen. Bei einer Neigungseinstellung der Rückenlehne erfolgt erfindungsgemäß kein ungewolltes Auslösen einer Verriegelung der Freischwenkfunktion.

Im folgenden ist die Erfindung anhand zweier in der Zeichnung dargestellten Ausführungsbeispiele näher erläutert. Es zeigen
- Fig. 1: eine Seitenansicht des ersten Ausführungsbeispiels in einem verriegelten Gebrauchszustand, wobei das Beschlagunterteil nur teilweise dargestellt ist,
- Fig. 2: eine perspektivische Ansicht einer festen Rolle in Richtung des Pfeiles II in Fig. 1,
- Fig. 3: eine nur teilweise dargestellte Seitenansicht des ersten Ausführungsbeispiels in einem vorgeschwenkten Zustand,
- Fig. 4: eine perspektivische Ansicht eines Gleitsteins,
- Fig. 5: eine Seitenansicht des zweiten Ausführungsbeispiels in einem verriegelten Gebrauchszustand, wobei das Beschlagunterteil nur teilweise dargestellt ist, und
- Fig. 6: eine nur teilweise dargestellte Seitenansicht des zweiten Ausführungsbeispiels in einem vorgeschwenkten Zustand.

Das erste Ausführungsbeispiel betrifft einen Gelenkbeschlag 1 für einen Fahrzeugsitz mit freischwenkbarer, neigungseinstellbarer Rückenlehne, beispielsweise für eine Rücksitzbank. Der Gelenkbeschlag 1 weist ein Beschlagunterteil 3 und ein Beschlagoberteil 4 auf, welches bei entriegeltem Gelenkbeschlag 1 um eine im Beschlagunterteil 3 gelagerte Lehnendrehachse 6 relativ zum Beschlagunterteil 3 schwenkbar ist. Das Beschlagunterteil 3 wird am Sitzteil auf einer Seite des Fahrzeugsitzes angebracht, während das Beschlagoberteil 4 auf dieser Seite mit der Rükkenlehne verbunden wird. Je nach Teilung des Fahrzeugsitzes werden mehrere Gelenkbeschläge 1 eingesetzt. Die gewöhnliche Anordnung im Fahrzeug und die normale Fahrtrichtung definieren die nachfolgenden Richtungen.

Ein Abdeckblech 9 ist mit dem Beschlagunterteil 3 fest verbunden und wird von der Lehnendrehachse 6 durchdrungen. Das Beschlagoberteil 4 ist im Bereich der Lehnendrehachse 6 zwischen dem Beschlagunterteil 3 und dem Abdeckblech 9 angeordnet. An dem Ende, welches in einem verriegelten Gebrauchszustand des Gelenkbeschlags 1 nach unten weist, ist das Beschlagoberteil 4 mit einer Verzahnung 4' versehen. Die Verzahnung 4' wirkt mit einer in der Zeichnung nur angedeuteten, im Beschlagunterteil 3 gelagerten Klinke 10 zusammen, welche von einem im Beschlagunterteil 3 gelagerten Spannexzenter 11 gehalten wird. Konzentrisch zum Spannexzenter 11 ist im Abdeckblech 9 ein zweiarmiger Mitnehmerhebel 13 gelagert, welcher mittels einer profilierten Übertragungsstange 15 mit einem entsprechenden Mitnehmerhebel 13 eines Gelenkbeschlages auf der anderen Seite des Fahrzeugsitzes verbunden ist. Verschiedene Federn halten im verriegelten Zustand des Gelenkbeschlags 1 die genannten Bauteile in Eingriff. Dabei liegt ein Arm des Mitnehmerhebels 13 am unteren Rand des Abdeckblechs 9 an.

Im Beschlagoberteil 4 ist oberhalb der Lehnendrehachse 6 eine schlitzförmige Führung 20 ausgebildet, welche auf die Lehnendrehachse 6 ausgerichtet ist. In dieser Führung 20 ist ein Gleitstein 22 beweglich eingesetzt, welcher sich im verriegelten Zustand des Gelenkbeschlags 1 etwas oberhalb des unteren Endes der Führung 20 befindet. Der aus Kunststoff gefertigte Gleitstein 22 weist ein U-Profil auf, dessen Schenkel 24 in der Art eines Clips mit Nasen versehen sind. Der Gleitstein 22 wird von der dem Abdeckblech 9 zugewandten Seite her mit den leicht zusammengedrückten, federnden Schenkeln durch die Führung 20 gesteckt, so daß die Nasen das Beschlagoberteil 4 auf der dem Beschlagunterteil 3 zugewandten Seite hintergreifen können. Auf der dem Abdeckblech 9 zugewandten Seite steht vom Gleitstein 22 ein zylindrischer, abgestufter Zapfen 26 ab, der an seinem freien Ende ebenfalls in der Art eines Clips mit Schenkeln und Nasen als Sicherung versehen ist.

Eine dem Beschlagoberteil 4 zugeordnete, bewegliche erste Umlenkrolle 30 ist auf den Zapfen 26 geschoben und wird durch die beschriebene Sicherung gehalten. Die erste Umlenkrolle 30 ist auf dem Zapfen 26 drehbar gelagert. Eine dem Beschlagunterteil 3 zugeordnete, feste zweite Umlenkrolle 33 ist am Abdeckblech 9 konzentrisch zur Lehnendrehachse 6 angebracht. Beide Umlenkrollen 30 und 33 weisen auf ihrem Umfang eine ringförmige Nut zur Aufnahme eines Seiles 35 auf. Das als flexibles Betätigungselement wirkende Seil 35 ist an einem Ende an einem Hebelarm des Mitnehmerhebels 13 befestigt, in einem ersten Abschnitt 35' zur zweiten Umlenkrolle 33 geführt, liegt an deren nach hinten weisender Seite an, ist in einem zweiten Abschnitt 35" zur ersten Umlenkrolle 30 geführt, liegt über die obere Hälfte von deren Umfang an ihr an, ist in einem dritten Abschnitt 35''' von der nach vorne weisenden Seite der ersten Umlenkrolle 30 zu der nach vorne weisenden Seite der zweiten Umlenkrolle 33 geführt, liegt an dieser an und ist auf der nach unten weisenden Seite der zweiten Umlenkrolle 33 mittels eines Stiftes 37 oder eines Seilzugnippels befestigt.

Ein auch als Betätigungselement wirkendes, weiteres Seil 38 ist am Gleitstein 22 angebracht und zu einem Entriegelungshebel mit geeigneter Handhabe geführt. Statt des weiteren Seiles 38 kann auch eine feste Stange verwendet werden. Die am Mitnehmerhebel 13 vorgesehene Feder sorgt dafür, daß die beiden Seile 35 und 38 straff gespannt sind. Die Wirkungslinie einer Zugkraft zum Entriegeln verläuft durch das weitere Seil 38, in der Mitte zwischen den Abschnitten 35" und 35''', schneidet die Lehnendrehachse 6 senkrecht und verläuft zu der Befestigungsstelle des Seils 35 am Mitnehmerhebel 13.

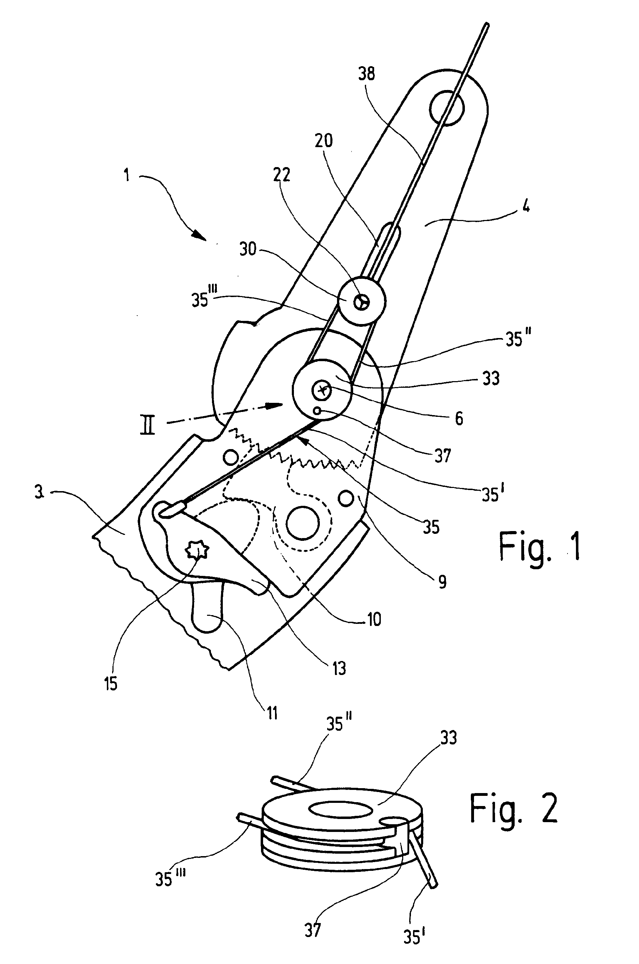

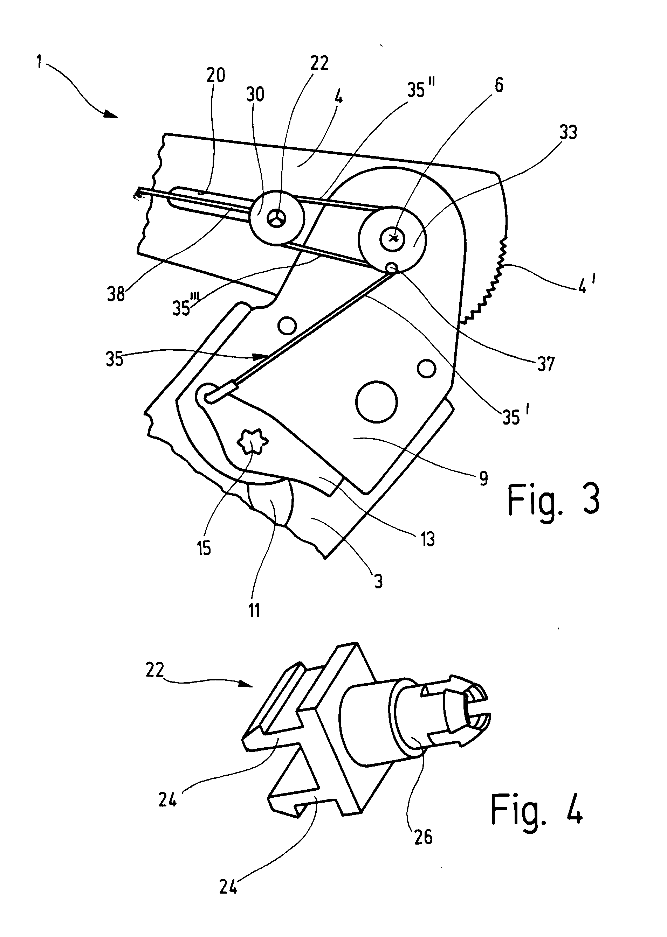

Ausgehend von dem in Fig. 1 dargestellten verriegelten Zustand wird durch Zug an dem weiteren Seil 38 der verschiebbar geführte Gleitstein 22 in der Führung 20 nach oben gezogen. Der dritte und der zweite Abschnitt 35"' und 35" verlängern sich, wobei zugleich der erste Abschnitt 35' verkürzt wird, d.h. das Seil 35 am Mitnehmerhebel 13 zieht. Dadurch schwenkt der Mitnehmerhebel 13 (in der Zeichnung im Uhrzeigersinn), löst den Spannexzenter 11 von der Klinke 10, welche die Verzahnung 4' des Beschlagoberteils 4 freigibt. Über die Übertragungsstange 15 wird die Bewegung des Mitnehmerhebels 13 zur anderen Seite des Fahrzeugsitzes übertragen, wo entsprechend entriegelt wird. Die Rückenlehne kann nun mit dem Beschlagoberteil 4 nach vorne geschwenkt werden, um eine andere Neigung einzustellen oder um in den freigeschwenkten Zustand überzugehen. Im letztgenannten Fall bringen die vorhanden Federn wieder die Bauteile zum Verriegeln in deren Ausgangsposition und spannen die Seile 35 und 38. Dieser Zustand ist in Fig. 3 dargestellt. Durch die flaschenzugartige Anordnung bewegt sich das Seil 35 im ersten Abschnitt 35' um eine doppelt so große Wegstrecke wie das weitere Seil 38.

Wird nun das Beschlagoberteil 4 weiter nach vorne geschwenkt, wickelt der dritte Abschnitt 35''' des Seiles 35 sich etwas von der unterteilfesten zweiten Umlenkrolle 33 ab und wird am anderen Ende von der ersten Umlenkrolle 30 mitgenommen, und der zweite Abschnitt 35" wird ein Stück weit von der ersten Umlenkrolle 30 freigegeben und am anderen Ende ein Stück weit auf die zweite Umlenkrolle 33 aufgewickelt. Das Seil 35 bleibt jedoch straff gespannt, da die die Wirkungslinie wiedergebende Summe des Abstandes zwischen dem Mitnehmerhebel 13 und der Lehnendrehachse 6 zuzüglich des Abstandes zwischen der Lehnendrehachse 6 und dem Zapfen 26 des Gleitsteins 22 konstant bleibt. Beim Zurückschwenken des Beschlagoberteils 4 verlagern sich der zweite und dritte Abschnitt 35" und 35''' in umgekehrter Weise. Durch einen nicht näher dargestellten Mechanismus fällt die Klinke 10 schließlich wieder in die Verzahnung 4' ein, so daß der Gelenkbeschlag 1 verriegelt ist.

Das zweite Ausführungsbeispiel betrifft einen Gelenkbeschlag 101, der in Aufbau, Funktion und Anwendung mit dem Gelenkbeschlag 1 des ersten Ausführungsbeispiels übereinstimmt, soweit nicht nachfolgend anders beschrieben. Gleiche Teile tragen daher um 100 höhere Bezugszeichen. Entsprechend sind Beschlagunterteil 103 und Beschlagoberteil 104 relativ zueinander verdrehbar um eine Lehnendrehachse 106. Zwischen dem Beschlagunterteil 103 und einem Abdeckblech 109 ist zum Zusammenwirken mit einer Verzahnung 104' des Beschlagoberteils 104 eine Verriegelungsvorrichtung vorgesehen, die eine am Beschlagunterteil 103 gelagerte Klinke, einen Spannexzenter 111 zum Sichern der Klinke und einen zweiarmigen Mitnehmerhebel 113 zum Bewegen des Spannexzenters 111 aufweist. Eine profilierte Übertragungsstange 115 verbindet den Mitnehmerhebel 113 mit einem entsprechenden Mitnehmerhebel auf der anderen Seite des Fahrzeugsitzes.

Eine dem Beschlagunterteil 103 zugeordnete erste Umlenkrolle 131 ist auf einem Hebelarm des Mitnehmerhebels 113 drehbar gelagert, beispielsweise auf einem dem Zapfen 26 im ersten Ausführungsbeispiel entsprechenden Zapfen mit Sicherung. Eine dem Beschlagoberteil 104 zugeordnete zweite Umlenkrolle 132 sitzt drehfest auf der Lehnendrehachse 106, so daß sie sich beim Schwenken des Beschlagoberteils 104 mitdreht. Als flexibles Betätigungselement ist ein Seil 136 von einem Entriegelungshebel mit Handhabe in einem ersten Abschnitt 136' von oben her zu der nach hinten gewandten Seite der zweiten Umlenkrolle 132 geführt, liegt an dieser an, ist in einem zweiten Abschnitt 136" zur ersten Umlenkrolle 131 geführt, umrundet diese unter Anlage auf ihrer nach unten weisenden Seite zu der nach vorne gewandten Seite, ist in einem dritten Abschnitt 136''' zu der nach vorne gewandten Seite der zweiten Umlenkrolle 132 geführt, liegt an dieser an und ist auf der nach oben weisenden Seite mittels eines Stiftes 137 an der zweiten Umlenkrolle 132 befestigt.

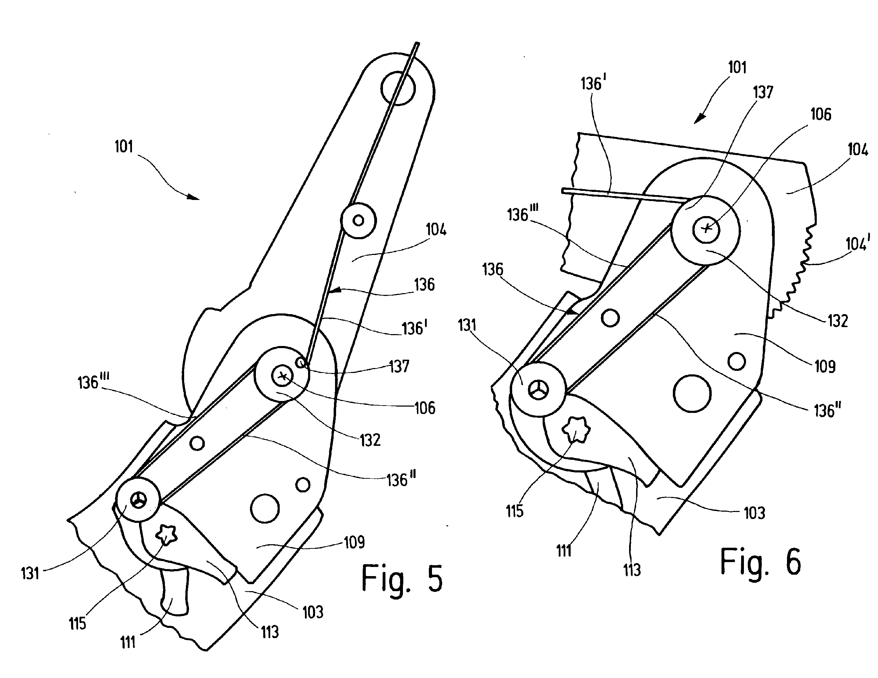

Ausgehend von einem in Fig. 5 dargestellten verriegelten Gebrauchszustand wird durch Zug an dem Seil 136 aufgrund des an der oberteilfesten zweiten Umlenkrolle 132 festgehaltenen Endes die erste Umlenkrolle 131 mit dem Mitnehmerhebel 113 in einer Schwenkbewegung nach oben gezogen, wodurch die Verriegelungsvorrichtung das Beschlagoberteil 104 frei gibt. Durch die flaschenzugartige Anordnung muß am Seil 136 mit einer gegenüber der Federkraft am Mitnehmerhebel 113 nur halb so großen Kraft gezogen werden. Fig. 6 zeigt einen Zustand, wenn das Beschlagoberteil 104 etwas nach vorne geschwenkt worden ist, die Bauteile der Verriegelungsvorrichtung aufgrund der Wirkungen der Federn sich wieder in ihren Ausgangspositionen befinden, aber die Klinke nicht mehr verriegelt ist. Beim weiteren Schwenken des Beschlagoberteils 104 wickelt der dritte Abschnitt 136"' sich etwas von der zweiten Umlenkrolle 132 ab und wird von der ersten Umlenkrolle 131 mitgenommen, und der zweite Abschnitt 136" rollt etwas von der ersten Umlenkrolle 131 ab und wickelt sich auf die zweite Umlenkrolle 132 auf. Das Seil 136 bleibt jedoch straff gespannt, da die in der Ebene senkrecht zur Lehnendrehachse 106 auf der Wirkungslinie der Zugkraft liegende Strecke zwischen dem Mitnehmerhebel 113 und der Lehnendrehachse 106 konstant bleibt.

In einer Abwandlung zu den beiden Ausführungsbeispielen ist neben dem Beschlagunterteil und dem Beschlagoberteil noch ein Zwischenteil vorgesehen, welches zum Freischwenken mit einem der beiden anderen Beschlagteile in der oben beschriebenen Weise verriegelt ist. Mit dem anderen Beschlagteil ist das Zwischenteil durch einen Rastmechanismus oder durch ein Getriebe verbunden. Mit dem derart als Rastbeschlag oder Taumelbeschlag ausgebildeten Gelenkbeschlag kann zusätzlich die Neigung der Rückenlehne eingestellt werden. Durch die erfindungsgemäße Anordnung des Seiles ist auch hier gewährleistet, daß bei einer Neigungsänderung der Rückenlehne das Seil straff gespannt bleibt.

### Bezugszeichenliste

- 1, 101: Gelenkbeschlag
- 3, 103: Beschlagunterteil
- 4, 104: Beschlagoberteil
- 4', 104': Verzahnung
- 6, 106: Lehnendrehachse
- 9, 109: Abdeckblech
- 11, 111: Spannexzenter
- 13, 113: Mitnehmerhebel
- 15, 115: Übertragungsstange
- 20: Führung
- 22: Gleitstein
- 24: Schenkel
- 26: Zapfen
- 30: erste Umlenkrolle
- 33: zweite Umlenkrolle
- 35: Seil
- 35': erster Abschnitt
- 35": zweiter Abschnitt
- 35''': dritter Abschnitt
- 37, 137: Stift
- 38: weiteres Seil
- 131: erste Umlenkrolle
- 132: zweite Umlenkrolle
- 136: Seil
- 136': erster Abschnitt
- 136": zweiter Abschnitt
- 136''': dritter Abschnitt

## Patentansprüche

1. Gelenkbeschlag für einen Fahrzeugsitz, mit wenigstens zwei relativ zueinander um eine Lehnendrehachse (6; 106) verdrehbaren Beschlagteilen (3, 4; 103, 104), die durch eine Verriegelungsvorrichtung (4', 11; 104', 111) verriegelbar sind, wenigstens einem flexiblen Betätigungselement (35; 136) zum Entriegeln der Verriegelungsvorrichtung (4', 11; 104', 111), dessen Wirkungslinie die Lehnendrehachse (6; 106) schneidet, und wenigstens einer Umlenkung (30; 131) für das flexible Betätigungselement (35; 136), **dadurch gekennzeichnet, daß** ein Ende des flexiblen Betätigungselementes (35; 136) an einem Beschlagteil (3; 104) befestigt ist.

2. Gelenkbeschlag nach Anspruch 1, **dadurch gekennzeichnet, daß** das flexible Betätigungselement (35; 136) an oder im Bereich der Lehnendrehachse (6; 106) befestigt ist.

3. Gelenkbeschlag nach Anspruch 2, **dadurch gekennzeichnet, daß** das flexible Betätigungselement (35; 136) an einer beschlagteilfesten Rolle (33; 132) befestigt ist, welche konzentrisch zur Lehnendrehachse (6; 106) angeordnet ist.

4. Gelenkbeschlag nach einem der Ansprüche 1 bis 3, **dadurch gekennzeichnet, daß** die Umlenkung (30; 131) auf der Wirkungslinie beweglich ist.

5. Gelenkbeschlag nach Anspruch 4, **dadurch gekennzeichnet, daß** die Umlenkung (30; 131) als drehbar gelagerte Rolle ausgebildet ist.

6. Gelenkbeschlag nach einem der Ansprüche 1 bis 5, **dadurch gekennzeichnet, daß** das flexible Betätigungselement (35; 136) zwei nebeneinander angeordnete Abschnitte (35", 35'''; 136", 136"') aufweist, zwischen denen die Wirkungslinie verläuft.

7. Gelenkbeschlag nach Anspruch 6, **dadurch gekennzeichnet, daß** zwischen den Abschnitten (35", 35'''; 136", 136"') die Umlenkung (30; 131) angeordnet ist.

8. Gelenkbeschlag nach Anspruch 6 oder 7, **dadurch gekennzeichnet, daß** bei einer Schwenkbewegung des Gelenkbeschlags (1; 101) die Abschnitte (35", 35'''; 136", 136"') sich ein Stück weit von einer Rolle (33; 132) abwickeln bzw. aufwickeln.

9. Gelenkbeschlag nach Anspruch 8, **dadurch gekennzeichnet, daß** bei den Abschnitten (35", 35'''; 136", 136"') das abgewickelte und das aufgewickelte Stück gleich lang sind.

10. Fahrzeugsitz, insbesondere Kraftfahrzeugsitz, mit einem Gelenkbeschlag (1; 101) nach einem der Ansprüche 1 bis 9.
